# EUROPEAN PATENT SPECIFICATION

(11) **EP 2 112 657 B1**
(45) Date of publication and mention of the grant of the patent: **15.12.2010**
(21) Application number: 08007948.6
(22) Date of filing: 24.04.2008
(51) Int. Cl.: G11B 7/125, G11B 7/005

(54) **Lifetime improvement of laser diodes in optical drives**
Verbesserung der Lebensdauer von Laserdioden in optischen Laufwerken
Amélioration de la durée de vie des diodes laser dans des lecteurs optiques

(43) Date of publication of application: 28.10.2009
(73) Proprietor: Harman Becker Automotive Systems GmbH, 76307 Karlsbad (DE)
(72) Inventor: Rutschmann, Richard, 79793 Wutoeschingen (DE); Huonker, Michael, 72348 Rosenfeld-Isingen (DE)
(74) Representative: Grünecker, Kinkeldey, Stockmair & Schwanhäusser Anwaltssozietät

(56) References cited:
- JP-A- 10 177 732
- JP-A- 60 239 929
- US-A1- 2004 233 825

## Description

### TECHNICAL FIELD OF THE INVENTION

The present invention relates to a reproducing apparatus for reproducing data recorded in an optical record carrier and having a laser light source for reading the recorded data, more particularly, to a reproducing apparatus having an improved lifetime of the laser light source.

### BACKGROUND OF THE INVENTION

Optical drives and reproducing apparatus for optical discs such as CD (Compact Disc) players and DVD (Digital Versatile Disc) players have known a wide spread in recent years as household appliances, portable devices and standard equipment of vehicles. Therefore, a great effort has been put in the development of cost-effective devices with low power consumption and high durability of its components.

The laser diode used for reading the data recorded in the optical disc is one of the most critical components of an optical drive in terms of cost and operation lifetime. In particular, the lifetime of laser diodes is known to decrease with the increase of ambient temperature and/or laser driving current. Therefore, an efficient operation of the laser diode is a crucial issue for improving its lifetime.

For instance, current optical drives for magneto-optical or optical discs are now able to read data for reproduction at a faster rate than needed by the host system. Therefore, a so-called track buffer is used from which the incoming audio/video data is read out at a nominal speed lower than the speed at which the incoming data is written to the buffer.

European patent application EP-A-465 053 describes a reproducing apparatus that uses a buffer and that interrupts the incoming data stream from time to time in order to avoid buffer overflow. However, the laser diode remains switched on also when data is neither being read from the optical disc nor supplied to the buffer memory.

European patent application EP 1619675 A1 describes a method that allows the total operation time of the laser diode to be reduced by switching off the laser diode during a time interval, the laser-off time, in which the reading of data from the optical disc is interrupted.

The focus and tracking servo control loops are also switched off during the laser-off time for reducing power consumption and ambient temperature. Before restarting the reading operation, the servo controls are then switched on close to the tangential position where they were switched off to avoid the need of executing a complete focus search sequence due to different focus offsets at different tangential positions on the optical disc. Nevertheless, the laser diode needs to be switched on a certain time before the reading of data is restarted to allow time for the system to recover and re-synchronize. The system recovery and re-synchronization time depends on several factors such as the latency time associated with the optical disc rotation, and the time required for refocusing the laser and for jumping to the track where the reading operation from the record carrier was interrupted.

For example, using as video playback parameters a system recovery and re-synchronization time of 0.14 seconds, a buffer size of 4 Mb, an outgoing data rate of 8 Mb/s and an incoming data rate of 22 Mb/s, the difference between the overall playback time and the buffer fill time plus the system recovery and re-synchronization time leads to a laser-off time of 0.18 seconds. This estimation of the laser-off time is about 36% of the overall playtime but still comparable to the system recovery and re-synchronization time in which the laser diode is on but not reading.

Therefore, the amount of time in which the laser diode can be effectively switched off between reading operations is not optimal.

In addition, the complete shut down of the focus and tracking servo loops may be disadvantageous in the case of optical drives implemented in vehicles or portable devices, which are exposed to mechanical disturbances such as vibrations or shocks. If such disturbances occur when the focus and the tracking servos are switched off, a deviation of the reproducing head from the position where it was switched off will not be promptly corrected. In this case, a complete focus and track search sequence may be required, therefore, increasing the amount of time during which the laser diode is on without being used for reading data.

Document US- A- 2004 233 825 (cf. the preamble of claim 1) relates to an optical disc apparatus, a camera apparatus, and a method for controlling a light emission operation, wherein power consumption and an increase in temperature due to a laser light emitting portion mounted on an optical head portion are suppressed. Preparation operations for recording or reproduction such as focusing control, tracking control, and idling control, can be performed while switching ON the laser light emitting portion as less frequently as possible so as to suppress the power consumption and the temperature increase of the laser light emitting portion and thereby improve the reliability and the life span of the apparatus

### SUMMARY OF THE INVENTION

The present invention aims at overcoming the disadvantages and shortcomings of the prior art techniques and an object thereof is to provide a reproducing apparatus that efficiently uses the laser light source employed for reading data recorded in an optical record carrier, thereby, having a laser light source with improved lifetime.

This object is solved by the subject matter of the independent claim. Advantageous embodiments of the present invention are defined by the dependent claims.

According to an example a reproducing apparatus is provided for reproducing data recorded on an optical record carrier, the apparatus having an optical head comprising a laser light source for reading the data recorded on the optical record carrier; a laser driver unit for modulating a light output of the laser light source and adapted to drive said light output to change from a reading mode to a laser lifetime extension mode when an operation of reading said data is paused, wherein said laser lifetime extension mode is a pulsed light output mode.

By causing the laser beam to pulsate or switch on/off during the time in which the optical head is not being operated for reading data of content recorded in the optical record carrier, the present invention makes possible to minimize the total amount of time the laser diode emits laser light that is not being used as well as to reduce power consumption and ambient temperature. Consequently, the lifetime of the laser diode is increased as well as the total working hours of the reproduction device without having the laser diode replaced.

According to a further development, the laser driver unit is adapted to drive the light output of the laser light source to change from the laser lifetime extension mode to the reading mode when the operation of reading said data is resumed.

When the pause state in the operation of reading data from the optical record carrier is resumed, the laser lifetime extension mode is ended. Accordingly, the laser light emitted by the laser light source is driven to change from a pulsed light output, in which the laser light is emitted in the form of pulse, to a constant light output mode, in which the laser light source emits a continuous laser beam having a substantially constant average emission power corresponding to the optical power necessary for reading data. If the operation of reading data of the content recorded in the optical disc needs to be interrupted and resumed several times while reproducing the content, the laser light source is driven to switch accordingly between the pulsed light output mode and the constant light output mode.

In another advantageous example, said laser driver unit is adapted to output a laser driving signal with a predetermined timing during said laser lifetime extension mode for causing the laser light source to switch between a high light output level and a low light output level with substantially the predetermined timing.

Consequently, the timing at which the laser light source is driven to switch between the two light output levels can be set in advance based on the characteristics of the host system and so that the duty cycle of the laser light source during the laser lifetime extension mode is minimized.

According to a further example, the reproducing apparatus comprises a sampling controller adapted to generate a laser driver control signal output for controlling the timing of the laser driving signal that is output by the laser driver unit, wherein the sampling controller is adapted to generate a pulsed laser driver control signal output with the predetermined timing during said laser lifetime extension mode, and the laser driver unit is adapted to output a laser driving signal with the predetermined timing in response to said pulsed driver control signal.

In this way, it is possible to implement the invention using any laser driver unit having an output channel that can be pulsed or switched on/off rapidly in response to an external control signal with the desired timing. In order that the laser light source is driven to emit a pulse of laser light at substantially the desired timing, the output of the laser driver unit must be highly responsive to the timing of the supplied timing control signal.

According to an advantageous development, the sampling controller is adapted to generate a continuous laser driver control signal output during the reading mode and to change the continuous laser driver control signal output to the pulsed laser driver control signal output when said operation of reading data is paused. This allows to control the transition between the two light output modes by using the same control signal whose timing is changed by the sampling controller.

In another advantageous example, the reproducing apparatus comprises a feedback sample-and-hold circuit adapted to receive a laser monitor signal indicative of a light output of the laser light source, to sample and hold the laser monitor signal and then to output the laser monitor signal; and a feedback control circuit adapted to generate and output a feedback signal for controlling the laser driver unit to adjust a value of the laser driving signal based on an input laser monitor signal and a reference value and so as to cause the input laser monitor signal to converge to the reference value, wherein said feedback control circuit is adapted to receive the laser monitor signal from the feedback sample-and-hold circuit, and the sampling controller is adapted to generate and output a feedback sample-and-hold signal with a first predetermined timing during the laser lifetime extension mode so as to control the feedback sample-and-hold circuit to sample the received laser monitor signal when the laser light source is in the high light output level and to hold the sampled laser monitor signal during at least the duration of the subsequent low light output level.

The feedback control circuit serves the purpose of adjusting the optical power of the laser beam emitted by the laser light source to a desired level. By implementing a sample-and-hold circuit at a stage prior to the feedback control circuit and by synchronizing the sample-and-hold circuit with the pulse of laser light emitted during the laser lifetime extension mode, the present invention makes possible to supply an input signal to the feedback control circuit that corresponds always to the same light output level. Therefore, the feedback control of the optical power can remain active also during the pulsed light output mode and effectively adjust the optical power of the laser light emitted during successive, similar light output levels based on a signal indicative of similar optical power.

According to a further example, the reproducing apparatus comprises a focus servo system adapted to perform focus control of a laser beam incident on the optical record carrier based on a signal indicative of a laser beam reflected from the optical record carrier during said laser lifetime extension mode; and a focus servo sample-and-hold circuit adapted to receive said signal indicative of the laser beam reflected from the optical record carrier, to sample and hold the received signal and then to output the signal to the focus servo system; wherein the sampling controller is adapted to generate and output a focus sample-and-hold signal with a second predetermined timing during the laser lifetime extension mode so as to control the focus servo sample-and-hold circuit to sample the received signal when the laser light source is in the high light output level and to hold the signal during at least the duration of the subsequent low light output level.

In a further development, the reproducing apparatus comprises a tracking servo system adapted to perform tracking control of a laser beam incident on a record track of the optical record carrier based on a signal indicative of a laser beam reflected from the optical record carrier, wherein the tracking servo system is maintained engaged during said laser lifetime extension mode, and the sampling controller is adapted to generate and output a tracking servo control signal with a third predetermined timing during said laser lifetime extension mode so as to control the tracking servo system to perform said tracking control based on the signal indicative of the laser beam reflected from the optical record carrier that is obtained when the laser light source is in the high light output level.

Consequently, by maintaining the focus and/or tracking servo controls engaged during the pulsed light output mode, it is not necessary to perform a complete refocusing and/or tracking operation of the laser beam incident on the optical record carrier once the reading operation is resumed. This allows to further reduce the time the laser is on without reading data and therefore, to increase the duration of the laser lifetime.

According to another advantageous development, during the laser lifetime extension mode the sampling controller is adapted to synchronize at least one of the feedback sample-and-hold signal, focus sample-and-hold signal, and tracking servo control signal with the pulsed laser driver control signal.

In this case, by synchronizing the sample-and-hold signals with, for instance, the high level of the pulsed laser driver control signal, the corresponding sample-and-hold circuits can be controlled to sample the received signals when the laser light source is emitting in the high light output mode and to hold the sampled signal during at least the duration of the subsequent low light output level. When the tracking servo control signal is synchronized with the high level of the pulsed laser driver control signal, the tracking servo system performs tracking control using a signal detected when the laser light source is emitting in the high light output level.

The synchronization of the feedback sample-and-hold circuit, focus servo sample-and-hold circuit and tracking servo system allows to perform the feedback and servo control operations based on a same diode signal detected during the same emission level, that is, when the optical power is at the highest level. Further, since the feedback and servo control operations can be coordinated to be performed simultaneously, the duration of the high light output mode can be reduced to a minimum thereby further reducing the duty cycle of the laser light source during the laser lifetime extension mode. In addition, since during the low light output level the laser beam is not used, the low light output level may be set to null optical power for further improving the lifetime of the laser light source.

According to another example, the reproducing apparatus comprises a buffer adapted to store the data recorded in the optical record carrier that is read by the optical head and which is to be reproduced; and a system controller adapted to monitor a fill level of the buffer and to control the transition between the laser lifetime extension mode and the reading mode based on the fill level of the buffer.

In this way, the adjustment of both the start and duration of the laser lifetime extension mode can be controlled dynamically based on the current fill level of the buffer. The transition between reading mode and the laser lifetime extension mode is thus adjusted dynamically based on current conditions of reading and reproduction, irrespectively of the type of contents to be reproduced, differences in the rate at which data is read by the optical head and the rate at which the read data is reproduced by the reproducing apparatus, etc.

The accompanying drawings are incorporated into and form a part of the specification for explaining the principles of the invention. The drawings are not to be construed as limiting the invention to only the illustrated and described examples of how the invention can be made and used.

### BRIEF DESCRIPTION OF THE FIGURES

Further features and advantages will become apparent from the following and more particular description of the invention as illustrated in the accompanying drawings, in which:
Fig. 1 is a block diagram showing a configuration of component parts of a reproducing apparatus according to an embodiment of the present invention;
Fig. 2 is a timing diagram illustrating signals that are generated during a reading mode and a laser lifetime extension mode of operation of the reproducing apparatus according to an embodiment of the invention;
Fig. 3 is a flowchart illustrating a sequence of logical steps of a method or a program performed by the reproducing apparatus according to an embodiment of the invention;
Fig. 4 is a graph showing the variation of a buffer fill level during operation in a laser lifetime extension mode and a subsequent reading mode of the reproducing apparatus according to an embodiment of the invention.

### DETAILED DESCRIPTION OF THE INVENTION

Advantageous embodiments of the reproducing apparatus constituted according to the invention will now be described in further detail with reference to the accompanying drawings.

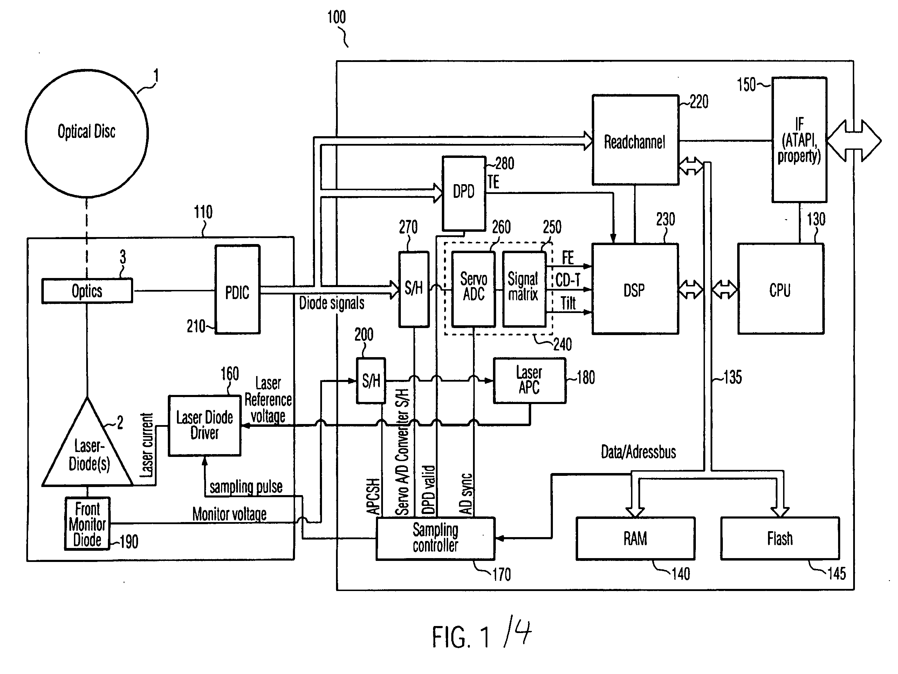

Figure 1 is a block diagram illustrating a configuration of component parts of a reproducing apparatus 100 according to the present invention.

As shown in Fig. 1, the reproducing apparatus 100 has an optical pick-up or optical head 110 for reading data recorded on record tracks of an optical disc 1, which is an optical record carrier.

The optical record carrier can be any storage means suitable for recording content with or without compression, such as audio data and/or video data, and that can be read by optical means.

Preferably, the optical record carrier is an optical disc 1, such as a magneto-optical disc, a CD, a DVD, a Blu-Ray Disc or a HD (High Definition) disc. The reproducing apparatus 100 is a device suitable to read data recorded as record tracks of the optical disc 1 by optical means known in the art, such as a CD player, a DVD player and a Blue-Ray player, and to convert the read data into a reproducible audio and/or video signal to be reproduced. The recorded data may be any types of data such as image data, audio data, video data, a combination of any and the like. The reproducing apparatus 100 may already comprise the means for reproducing the converted audio and/or video signal, such as a portable CD player. Alternatively, the reproducing apparatus 100 may not comprise reproduction means, such as an optical drive, but instead supply the reproducible signal to external means for being reproduced.

The optical head 110 comprises a laser light source, such as a laser diode 2, optical related components 3, such as objective lens for focusing a spot of a laser beam emitted by the laser diode 2 onto the optical disc 1, and tracking and focusing actuators (not shown) for carrying out tracking servo and focus servo adjustment of the laser beam projected on the optical disc 1. The tracking and focusing actuators, such as tracking and focus coils, are controlled by an actuator driver for producing a movement of the optical lens in a tracking direction (in a radial direction of an optical disc 1) and in a focus direction (in a direction perpendicular to the surface of the optical disc 1).

The optical head 110 reads the data recorded on the optical disc 1 by projecting the spot of laser light emitted by the laser diode 2 onto a record track of the optical disc 1 and by detecting a laser light beam reflected from the optical disc 1.

In the present embodiment, the reproducing apparatus 100 is implemented with one laser diode 2 for reading data from the optical disc 1. However, the reproducing apparatus 100 may comprise more than one laser diode 2, for example, for reading content recorded in optical discs under different standards, such as DVD discs (650 nm) and CD discs (780 nm) or for reproducing more than one optical disc 1 without changing the optical disc 1.

The reproducing apparatus 100 has a system controller such as a CPU (Central Processing Unit) 130 that controls several circuit blocks of the reproducing apparatus 100 via a data/address bus 135, based on signals read from the optical disc 1 or under predefined conditions.

The reproducing apparatus 100 further comprises storage means that stores temporally and/or permanently several types of data, such as data and programs executed by the CPU 130, data read by the optical head 110, and data to be reproduced. The storage means may be composed of a non-volatile memory and/or volatile memory, such as a RAM (Random Access Memory), flash memory, EEPROM (Electronically-Erasable Programmable Read-Only Memory), and the like. In the illustrated embodiment, the storage means comprise a RAM 140 and a Flash memory 145.

Preferably, the storage means also comprise a data buffer (not shown) for temporarily storing the data read by the optical head 110. The buffer may be implemented in the RAM 140 and is used to compensate for a difference in the rate at which data is read by the optical head 110 from the optical disc 1 and the rate at which data is processed for being reproduced or played back.

The reproducing apparatus 100 also comprises an interface (IF) 150 for interfacing with peripheral circuits, such as an Advanced Technology Attachment Packet Interface (ATAPI) used for connecting an optical disc drive with storage devices.like hard disks inside personal computers.

As illustrated in Fig. 1, the reproducing apparatus 100 comprises a laser diode driver 160, which is a laser driver unit for energizing the laser diode 2. The laser diode driver 160 is preferably implemented in the optical head 110 but it may be alternatively implemented as a separate circuit unit in the reproducing apparatus 100.

The laser diode driver 160 generates and outputs a laser driving signal that energizes the laser diode 2 and modulates the optical power of the light output from the laser diode 2. The amplitude and frequency of the laser driving signal determine the emission power and the time modulation of the laser light emitted by the laser diode 2. In the present embodiment, the laser driving signal is a laser driving current. However, a laser driving voltage could also be used after introducing circuitry modifications known in the art.

In case the reproducing apparatus 100 is implemented with more than one grounded laser diodes 2, the laser diode driver 160 may be designed with more than one laser driving outputs for operating each laser diode. Alternatively, the reproducing apparatus 100 may comprise a separate laser diode driver 160 for driving each laser diode 2.

For simplicity, the reproducing apparatus 100 will be described as comprising a single laser diode 2 and a single laser diode driver 160.

The reproducing apparatus 100 is implemented so as to drive the laser diode 2 to emit laser light under two distinct operation modes: a reading mode and a laser lifetime extension mode.

The reading mode refers to an operation state of the reproducing apparatus 100 during which the optical head 110 reads data recorded in the optical disc 1 to be reproduced. In the preferred embodiment, the content data, which is data of a content recorded in the optical disc 1, is read by the optical head 110 and stored in the data buffer. The stored content data is then read out in a FIFO sequence to be processed and converted into a reproducible or a playback signal, such as an audio and/or video signal. Preferably, once a certain amount of content data is stored in the buffer, the operations of writing content data into the buffer and of reading out content data from the buffer to be reproduced are substantially simultaneous.

During the operation of reading data from the optical disc 1, simply referred in the following as reading operation, the laser diode driver 160 generates and outputs a continuous laser driving current that drives the laser diode 2 to emit a laser beam with the optical power required for the reading operation. The average optical power is maintained substantially constant during the reading operation.

The laser lifetime extension mode refers to an operation state during which the optical head 110 is not driven for producing a signal indicative of content data recorded in record tracks of the optical disc 1 and/or during which the stream of audio and/or video content data into the memory buffer is interrupted for avoiding buffer overflow.

In case the reproducing apparatus 100 has means for recording or writing data in the optical disc 1, no recording operation takes place during the laser lifetime extension mode.

Since the operation of reading content data from the optical disc 1 into the buffer is interrupted, the emission of laser light at a certain constant power by the diode laser 2 is not needed. Therefore, the laser diode driver 160 outputs a laser driving signal with the form of a pulse signal with a predetermined timing or frequency for driving the laser diode 2 to emit a pulsed laser beam. The laser lifetime extension mode is therefore a pulsed light output mode.

The laser lifetime extension mode is maintained until the pause state in the operation of reading data from the optical disc 1 is ended and the reading operation resumed. The reproducing apparatus 100 then shifts into the operation in the reading mode, which is maintained until the next interruption of the incoming stream of content data.

During the laser lifetime extension mode, the pulsed laser beam switches rapidly between two spaced apart, emission power levels, a high light output level (ON state) and a low light output level (OFF state), at substantially the predetermined timing.

The predetermined timing is selected so as to minimize the duty cycle of the laser diode 2 during the pulsed light output mode for extending its lifetime. The duty cycle during the laser lifetime extension mode can be defined as the ratio between the overall time in which the laser diode emits laser light in the high light output level and the duration of the laser lifetime extension mode.

The desired duty cycle, the duration of the laser lifetime extension mode and the number of shifts between reading mode and laser lifetime extension mode depend on several parameters, such as the size of the audio and/or video content recorded in the optical disc 1, the buffer size, and the incoming and outgoing data rates, as will be described later. Therefore, during playback of a whole content, the reproducing apparatus 100 may need to switch once or several times between the operation in reading mode and in the laser lifetime extension mode. It may also occur that no transition into the laser lifetime extension mode is needed.

In order to achieve the desired duty cycle during the laser lifetime extension mode, the laser driver unit 160 needs to output a laser driving signal that switches rapidly between the amplitudes corresponding to the power emission desired for the ON and OFF states.

In the preferred embodiment, the laser diode driver 160 is designed with an enable input that allows to shutdown completely the output current channel for the laser driving current when an enable signal set to low is applied to the enable input of the laser diode driver 160. The output current channel is enabled by setting the applied enable signal to high. The enable input of the laser diode driver 160 is preferably of a digital type and become actives at the rising edge of the enable signal and inactive at the falling edge of the enable signal.

Therefore, in response to the high's and low's of the timing signal applied to the enable input, the laser driving current output is controlled to switch ON/OFF rapidly at substantially the same timing of the timing signal.

Alternatively, a laser diode driver 160 similar to those used in recorders can be used and suitably controlled for outputting a laser driving pulse with the desired timing during the laser lifetime extension mode. More specifically, the laser diode driver 160 may include a read channel output, which outputs a laser driving current corresponding to the optical power required for the reading operation, and at least one write channel output, which is controlled for outputting the pulsed laser driving current with the desired timing during the laser lifetime extension mode. The very fast switching speed of the write channel output allows outputting a pulsed laser driving current with the desired frequency during the laser lifetime extension mode.

As illustrated in Fig. 1, the reproducing apparatus 100 has a sampling controller 170 that serves the function of generating and outputting at least one timing signal for controlling and coordinating in time the actions of one or more circuit blocks of the reproducing apparatus 100. The sampling controller 170 is implemented as a separate circuit block and may generate different timing signals depending on the circuits and/or actions to be controlled. For instance, the timing signal may be a clock signal for synchronizing the actions of two specific circuits. Circuits using the clock signal for synchronization may become active at either the rising edge, falling edge, or both edges of the clock cycle.

More specifically, the sampling controller 170 generates and outputs a laser driver control signal, which is a timing signal, that caused the laser diode driver 160 to output a laser driving current with substantially the same timing of the laser driver control signal.

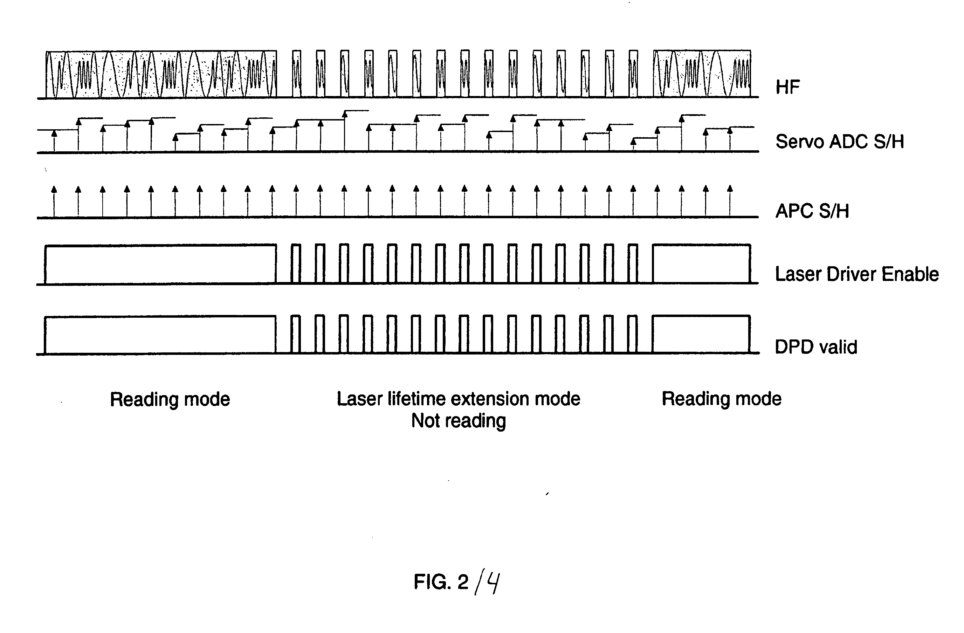

The laser driver control signal is applied to the enable input of the laser diode driver 160, therefore, functioning as the laser driver enable signal. The details of the laser driver enable signal will be described with reference to Fig. 2

During the reading mode, the sampling controller 170 generates and outputs a laser driver enable signal having a continuous, non-zero amplitude that is fed to the enable input of the laser diode driver 160. The current output of the laser diode driver 160 is therefore maintained enabled.

When the operation of reading data is paused and the laser lifetime extension mode started, the laser driver enable signal output by the sampling controller 170 is changed from the continuous laser driver control signal to a pulsed laser driver control signal. Preferably, the pulsed laser driver control signal is a sampling pulse that oscillates between two spaced apart levels, such as 1's and 0's, with a timing that corresponds to the duty cycle desired for the laser diode 2.

More specifically, the pulsed laser driver control signal is set to low during a time interval corresponding to the desired duration of the OFF state of the laser diode 2 and is set to high during a time interval corresponding to the desired duration of the ON state of the laser diode 2 during the laser lifetime extension mode.

In response to the pulsed laser driver control signal, the output current channel of the laser diode driver 160 is intermittently enabled/disabled according to the timing of the pulsed driver control signal. Consequently, the laser driving current output by the laser diode driver 160 has the form of a pulse signal that oscillates between a high and a low value with substantially the desired duty cycle, thereby causing the laser diode 2 to emit a pulsed laser beam with substantially the desired timing.

The amplitude of the laser driving current, and therefore the emitted optical power, during the high light output level and during the reading mode is adjusted based on a laser reference signal that is fed to the laser diode driver 160, as will be described below. Preferably, the laser driving current is set to zero during the low light output level.

When the laser lifetime extension mode is ended and the operation of reading mode resumed, the laser driver enable signal output by the sampling controller 170 is changed from a pulse signal back to a continuous driver control signal.

The laser diode driver 160 adjusts the amplitude of the output laser driving current, and ultimately, the optical power of the laser light emitted by the laser diode 2, based on a laser reference signal. The amount of the laser reference signal is indicative of the desired optical power.

As illustrated in Fig. 1, the laser reference signal is supplied to the laser diode driver 160 by a laser Automatic Power Control (APC) circuit 180 comprised in the reproducing apparatus 100.

The APC circuit 180 is a feedback control circuit that controls the laser diode driver 160 to adjust the amplitude of the laser driving signal such as to maintain the optical power within a desired value. The feedback control circuit also avoids overshoots of the laser driving signal above a maximum operating level that may damage the laser diode 2.

Although in the present embodiment the feedback control circuit is preferably a laser Automatic Power Control circuit 180, the feedback control circuit could also be implemented using an Automatic Current Control in combination with circuitry for monitoring the ambient temperature.

The APC circuit 180 compares a reference value corresponding to a desired light output with an input control signal indicative of the light output of the laser diode 2 and, based on the result of comparison, adjusts the amplitude of the laser reference signal supplied to the laser diode driver 160 so as to minimize deviations of the input control signal from the desired reference value. In the illustrated embodiment, the laser reference signal is a laser reference voltage.

Referring to Fig. 1, the reproducing apparatus 100 has a front diode monitor 190, which is a laser monitor sensor, for providing a control signal indicative of the optical power being currently emitted by the laser diode 2.

The front diode monitor 190 generates a laser monitor signal, in the illustrated embodiment a monitor voltage, which is in proportional relation to a detected light output. The front diode monitor 190 may be implemented as a photo-detector element, such as a photodiode, that generates a monitor current based on the incident laser radiation, together with an IV converter circuit for converting the monitor current into the monitor voltage.

The closed loop state of the APC circuit 180 is maintained during the reading mode and the laser lifetime extension mode. Therefore, to avoid that the APC circuit 180 performs power feedback control during both the OFF and ON states of the laser diode 2 in response to an oscillating laser monitor voltage, the reproducing apparatus 100 is implemented with a feedback sample and hold circuit that samples and holds the laser monitor signal output by the front monitor diode 190. The feedback sample and hold circuit will be referred in the following as APC S/H circuit 200.

As shown in Fig. 1, the APC S/H circuit 200 is implemented as a separate circuit between the output stage of the front diode monitor 190 and the input stage of the APC circuit 180. However, a modification could be envisaged in which the APC circuit 180 is implemented internally with the functionalities of the APC S/H circuit 200.

The APC S/H circuit 200 receives the monitor voltage from the front diode monitor 190, samples the received monitor voltage, holds the sampled value for a predetermined time and supplies the hold monitor voltage to the APC circuit 180.

During the reading mode, the laser diode 2 emits laser light with an average constant optical power; therefore, the laser monitor signal produced by the front diode monitor 190 is substantially constant.

However, the pulsed laser beam emitted during the laser lifetime extension mode causes the front diode monitor 190 to produce an laser monitor voltage that oscillates with substantially the same timing.

Therefore, during the laser lifetime extension mode, the APC S/H circuit 200 is controlled to sample the monitor voltage when the laser diode 2 is in the ON state and to hold the sampled value during at least the subsequent OFF state for the predetermined time, which is at least the amount of time in which the laser diode 2 is in the OFF state.

In the present embodiment, the sampling frequency of the APC S/H circuit 200 is externally controlled by a sample-and-hold signal that is generated and output by the sampling controller 170. This sample-and-hold signal, which will be referred to as APC S/H signal, is synchronized with the laser driver enable signal so as to make coincide the sampling of the monitor voltage with the ON states of the pulsed light output during the laser lifetime extension mode. Preferably, the frequencies of the APC S/H signal and the laser driver enable signal are substantially the same.

As illustrated in Fig. 2, the APC S/H signal is synchronized with the laser driver enable signal so that the sample time (indicated as an upward arrow) is made to coincide with each high level of the laser driver control signal. However, the APC S/H signal may have a different frequency, as long as the sample time is made to coincide with a high level of the laser driver enable signal.

In this way, the input control signal fed to the APC circuit 180 is always indicative of the light output during the ON state of the laser diode 2. Consequently, the APC circuit 180 does not need to perform feedback control during an OFF state of the laser diode 2 but provides a laser reference voltage to the laser diode driver 160 that is always adjusted with respect to an optical power detected during a ON state. Although during the subsequent OFF state the APC circuit 180 continues to output the laser reference voltage that was adjusted based on the monitor voltage sampled during the previous ON state, this laser reference voltage has no effect on the laser diode driver 160 since the output current channel of the laser diode driver 160 is disabled during the OFF state by the low in the laser driver enable signal.

Preferably, the sampling controller generates the APC S/H signal with the same sampling frequency during the reading mode. However, other sampling frequencies could be generated during the reading mode.

On the other hand, the reference values to be used by the APC circuit 180 may be stored in the storage means of the apparatus. Preferably, the reference value corresponding to the optical power to be used during a ON state in the laser lifetime extension mode is the same as the reference value to be used during the reading mode. However, these references values may be set differently, so that the optical power emitted in the ON state will be different from the optical power emitted during the reading mode.

The reproducing apparatus 100 further comprises a photo-detector integrated circuit (PDIC) 210, which is a photo-detector unit, preferably implemented in the optical head 110. The PDIC 210 detects a laser beam reflected by the optical disc 1 and based on the detected laser beam, supplies diode signals to external processing circuits for extracting various types of information from the supplied diode signals.

One of such circuits is a read channel unit 220 comprised in the reproducing apparatus 100. Based on the diode signal supplied by the PDIC 210, the read channel unit 220 creates a HF signal as reproduction data. The HF signal are sent to and processed by a digital signal processor (DSP) 230.

As illustrated in Fig. 1, the reproducing apparatus 100 has a focus servo system 240 that produces servo signals for performing focus control of the laser beam spot projected onto a record track of the optical disc 1.

In the preferred embodiment, the focus servo system 240 is engaged during both the reading mode and the laser lifetime extension mode. In this way, the waiting time required by the focus servo system 240 for performing an entire focus sequence when it is switched on can be eliminated and the amount of time the laser diode 2 needs to be ON is reduced, thereby improving the lifetime of the laser diode 2.

The focus servo system 240 comprises a servo matrix circuit 250 and a servo analog-to-digital converter 260 (Servo ADC) known in the related art.

The Servo ADC 260 converts an input analog signal into a digital signal. The servo matrix circuit 250 generates a servo signal, such as the focus error signal (FE), a tilt error signal (Tilt), and the like, based on the digital signal received from the Servo ADC 260. The generated servo signals are supplied to the DSP 230, which executes phase compensation processing, gain correction processing, and the like, of the received servo signal. The processed servo signals are applied to the actuator driver (not shown) for performing focus servo control.

The laser diode 2 is only switched on until the analog input stage of the APC circuit 180 and at the Servo ADC is settled. Since the servo shall maintain its operation, the diode signals supplied to the servo circuit block need to be sampled.

In the present embodiment, the reproducing apparatus 100 has a focus servo sample-and-hold circuit 270, thereinafter referred to as Servo S/H circuit, which is implemented at a stage prior to the Servo ADC 260. The Servo S/H circuit 270 serves the purpose of sampling an analogue diode signal received from the PDIC 210, and of holding the received analogue value steady for a predetermined time before feeding the analogue diode signal to the Servo ADC 260.

More specifically, during the pulsed light output mode, the Servo S/H circuit 270 is controlled to sample the analogue diode signal while the laser diode 2 is emitting in the ON state and to hold the sampled signal at least during the subsequent state during which the laser diode 2 is in the OFF state.

The sampling rate of the Servo S/H circuit 270 is externally controlled by a sample-and-hold signal, therein after referred to as a Servo ADC S/H signal, generated and supplied by the sampling controller 170.

Referring to Fig. 2, the sampling controller 170 generates the Servo ADC S/H signal with a sampling frequency that is substantially the same as the frequency of the laser driver enable signal during the laser lifetime extension mode. Further, the Servo ADC S/H signal is synchronized with the laser driver enable signal, so as to cause the Servo S/H circuit 270 to sample the signal supplied by the PDIC 210 when the laser diode 2 is in the ON state and to be hold during the OFF state. As illustrated in Fig. 2, the sampling controller 170 synchronizes the laser driver enable signal and the Servo ADC S/H by making the sample time of the Servo ADC S/H signal to coincide with an instant in which the laser driver enable signal is in the high level. Alternatively, the frequency of the Servo ADC S/H signal can be set differently while maintaining the synchronization of the sample time with the high level of the laser driver enable signal.

For simplicity, the sampling rate of the Servo S/H circuit 270 may be maintained when the reading mode resumed. Alternatively, the sampling frequency of the Servo ADC S/H signal may be set differently during the reading mode. For instance, in order to provide a finer servo control during the reading mode, the sampling rate can be increased, being only limited by the minimum time required by the Servo ADC 260 to convert the received analogue signals.

The sampling controller 170 further generates another timing signal, an A/D synchronization signal, which is supplied to the Servo ADC 260 for synchronizing the analogue-digital conversion. The Servo ADC 260 may be implemented with internal sample and hold circuitry for sampling and holding an input signal for the time required for the internal analog-to-digital conversion.

Although in the above embodiment the Servo S/H circuit 270 and the Servo ADC 260 are separate circuits, the functionality of the Servo S/H circuit 270 may be implemented in the Servo ADC 260, which is then designed with an additional control input for applying the external Servo ADC S/H signal.

In another embodiment, the reproducing apparatus 100 further comprises a tracking servo system for irradiating laser light onto a pit sequence with high accuracy. The tracking servo system produces tracking servo signals for performing tracking control of the laser beam spot that is projected onto the optical disc 1 with respect to a record track.

Preferably, the tracking servo system comprises a tracking error detection circuit that uses the well-known differential phase detecting method. This method lies on the fact that when laser light reflected from a disc surface is received by a photo-detector device divided into a number of light-receiving portions, a phase difference is generated between the signals output from each divided portion. The detected phase difference is used to generate a tracking error signal (TE) that is indicative of the amount of tracking error. Feedback tracking control is then performed using the obtained TE signal.

Referring to Fig. 1, the reproducing apparatus 100 comprises a differential phase detector (DPD) circuit 280. The DPD circuit 280 obtains phase difference information from the diode signal supplied by the PDIC circuit 210, converts the phase difference information into an analog amount (for example, a voltage value), and passes the obtained analog amount to the DSP circuit 230 at the subsequent stage for being processed.

Alternatively, the DPD circuit 280 may calculate the track error based on timing information of the pit edges (time difference measurement of diodes). While the laser is on, the DPD circuit 280 measures the time difference and calculates the tracking error.

In the preferred embodiment, the tracking servo system is maintained engaged during the reading mode, the laser lifetime extension mode and the transition between the two modes. Therefore, when the laser lifetime extension mode is exited and the reading mode is resumed, it is not necessary to switch on the laser diode 2 before effectively starting reading data from the optical disc 1 in order to allow an entire tracking sequence to be performed. In this way, the time the laser diode 2 is switched on without being reading data can be further reduced and its lifetime improved.

In order to maintain the tracking servo control engaged during the laser lifetime extension mode, the DPD circuit 280 is controlled to measure and calculate the tracking error while the laser diode 2 is emitting in the high output level. This synchronization of the tracking error detection is achieved by applying a DPD valid signal with a predetermined timing to the DSP circuit 230.

In the preferred embodiment, the sampling controller 170 generates and outputs the DPD valid signal, which is another timing control signal. Referring to Fig. 2, the DPD valid signal is essentially set to high during the reading mode in which the laser diode 2 is emitting at approximately constant optical power for reading data. When the reading operation is paused and the laser lifetime extension mode is started, the sampling controller 170 switches the DPD valid signal from the continuous signal to a pulse or clock signal with the desired timing.

Preferably, the frequency of the DPD valid signal is the same as the frequency of the pulsed laser driver enable signal. In addition, the sampling controller 170 synchronizes the DPD valid signal with the laser driver enable signal so that the DPD circuit 280 performs tracking detection only when the laser diode 2 is emitting in the high light output state in response to the DPD valid signal. For instance, the sampling controller 170 synchronizes the rising edge of the DPD valid signal with the rising edge of the laser driver enable signal as well as the falling edges of the two signals.

In this way, the HF signal produced by the pulsed laser beam during the laser lifetime extension mode can be used by the tracking servo system during the time in which the operation of reading data from the optical disc 1 is paused. Therefore, it is possible to maintain the tracking control engaged without the need of maintaining the laser diode 2 continuously switched on when the operation of reading data from the optical disc 1 is paused.

The characteristics of the pulsed laser light output, such as the time duration of the high light output level and the pulse frequency, are defined based on the characteristics of the reproducing apparatus 100. These also determine the characteristics of the timing signals generated by the sampling controller 170, such as the laser driving control signal, the DPD valid signal, the APC S/H signal and/or the Servo ADC S/H signal. The characteristic parameters of these signals can be pre-stored in the storage means 140.

As mentioned previously, the laser diode 2 has to remain switched on until the analog input stage of the APC circuit 180 is settled.

In addition, since the focus and/or tracking servo controls remain engaged during the laser lifetime extension mode, the pulse width, that is, the time duration of the ON state, needs to be long enough to allow the focus and/or tracking servo systems to detect and maintain servo errors to a minimum.

For instance, the pulse width is at least limited by the settle time of the input stage of the Servo ADC 260. It is known from recorders that the pulse width can be very narrow (a few 10's of ns wide), which translates into a laser duty cycle of 1/100 or lower.

In addition, if the tracking servo control is to be maintained effectively engaged during the pulsed light output, the width of the pulsed laser beam needs to be long enough to allow the detection of a few pit/land transitions in the optical disc 1 so that the tracking servo system might get a valid tracking signal.

The lifetime of the laser diode 2 is then maximized by setting the pulse width of the laser driver control signal to be generated by the sampling controller 170 as the maximum among the time required by the DPD circuit 280 for obtaining a valid tracking signal and the settle times of the laser APC 180 and the Servo ADC 260.

The maximum duration of each OFF state is determined based on the maximum hold time of the sampling-and-hold circuits as well as the frequency at which the diode signals and the monitor voltage need to be sampled to maintain an efficient power feedback and servo controls.

The duty cycle of the laser diode 2 during the pulsed light output mode, that is, the duration of the ON and OFF states and pulse frequency, can be stored in advance in the storage means 140 of the reproducing apparatus 100 to be used by the CPU 130 and/or the sampling controller 170 for generating the timing signals with the desired timings.

In particular, the sampling controller 170 may refer to the stored parameters for generating a pulsed laser driver enable signal with the corresponding time characteristics.

The duration of the laser lifetime extension mode as well as the transition between reading mode and laser lifetime extension mode is coordinated by the CPU 130 and depends on several factors, such as characteristics of the reproducing apparatus 100 and/or of the content to be reproduced.

As mentioned previously, the reproducing apparatus 100 uses preferably a buffer to compensate for differences between the rate at which data is read from the optical disc 1 and the rate at which data is reproduced.

When data is written into the buffer (incoming stream of data) at an incoming data rate higher than the rate at which data is read out from the buffer (outgoing stream of data), the buffer fills with time and reaches eventually its full capacity before the whole content stored in the optical disc 1 has been read.

The operation of reading data from the optical disc 1 into the buffer is then interrupted or paused for a certain time amount to avoid buffer overflow and the laser diode 2 is driven in the laser lifetime extension mode for improving its lifetime.

In the preferred embodiment, the duration of the laser lifetime extension mode and the transition between the reading mode and the laser lifetime extension mode are controlled dynamically by the CPU 130 based on the fill level of the buffer.

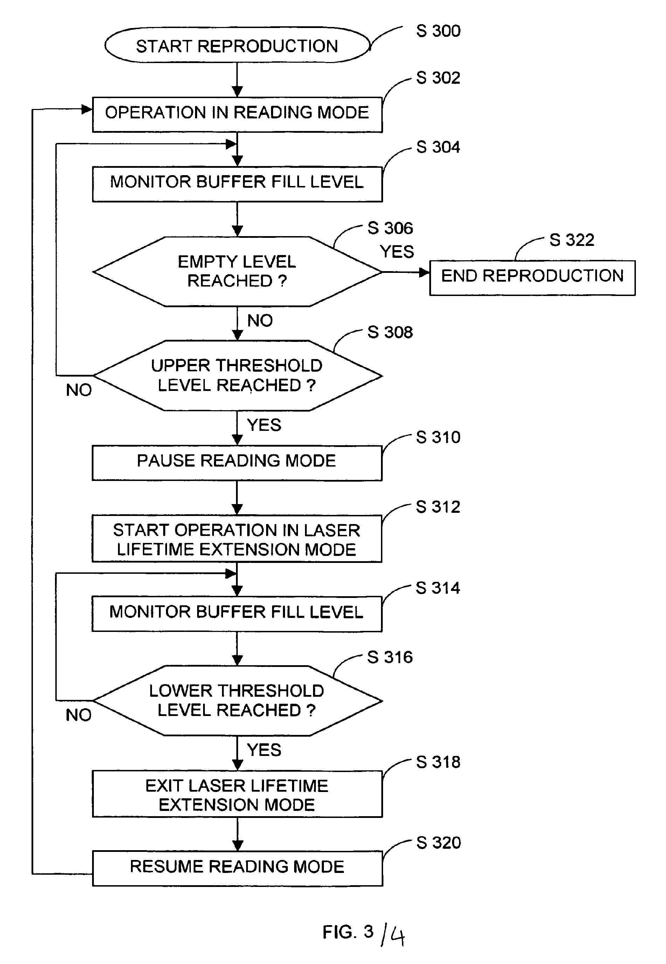

Fig. 3 illustrates a sequence of logical steps of a method or a program performed by the reproducing apparatus 100, more specifically by the CPU 130.

Once the reproducing apparatus 100 starts the reproduction of content from the optical disc 1 in step S 300, the routine proceeds to step S 302 in which several operations performed by the reproducing apparatus 100 are controlled in the above-described reading mode. These operations include reading content data from the optical disc 1, storing the content data processed by the read channel unit 240 in the buffer, and reading out data from the buffer to be reproduced. In addition, as described above, the operation in the reading mode also includes at least one of power feedback control, focus control and tracking control.

The routine includes a step S 304 in which the fill level of the buffer is monitored so that the incoming stream of data into the buffer might be controlled based on the detected buffer fill level. The buffer fill level indicates the amount of data stored in the buffer and can be monitored continuously or at certain time intervals.

The routine then includes a step S 306, in which it is determined whether the amount of data stored in the buffer has reached an empty level. If a NO answer is obtained, the routine proceeds to step S 308 in which it is determined whether the buffer fill level has reached a predetermined upper threshold level. If a YES answer is obtained, the routine proceeds to step 310, in which the CPU 130 instructs a pause in the reading mode. The incoming data stream is therefore interrupted. The routine then proceeds to step S 312, in which operation in the laser lifetime extension mode is initiated.

As described above, during the operation in the laser lifetime extension mode, the incoming stream of data into the buffer is interrupted while data stored in the buffer continues to be read out to be reproduced. The operation of reproducing the content is therefore maintained during the laser lifetime extension mode without interruptions. In case the reproducing apparatus 100 is also implemented for recording data in the optical disc 1, no operations of writing data onto the optical disc 1 are performed during the laser lifetime extension mode.

The operation in the laser lifetime extension mode, also includes instructing the sampling controller 170 to change the laser driver enable signal and/or DPD valid signal from continuous to pulse signals as previously described.

Once the laser lifetime extension mode is initiated, the routine includes a step S 114 of monitoring the fill level of the buffer, which is followed by a step S 116 in which it is determined whether the fill amount of data stored in the buffer has reached a predetermined lower threshold value. If the obtained answer is NO, the operation in the laser lifetime extension mode is maintained and steps S 114 and S 116 are repeated.

When it is determined that the lower threshold value is reached, the routine proceeds to step S 118, in which the operation in the laser lifetime extension mode is exit.

The routine then proceeds to step S 320 in which the operation in the reading mode is resumed. Subsequently, the routine returns to step S 302 and repeats steps 302 to 318 until all content data has been read from the optical disc 1 and reproduced. Eventually, when it is determined in step S 306 that the fill level of the buffer has reached an empty level, the routine proceeds to step S 222 and the reproduction of content is ended.

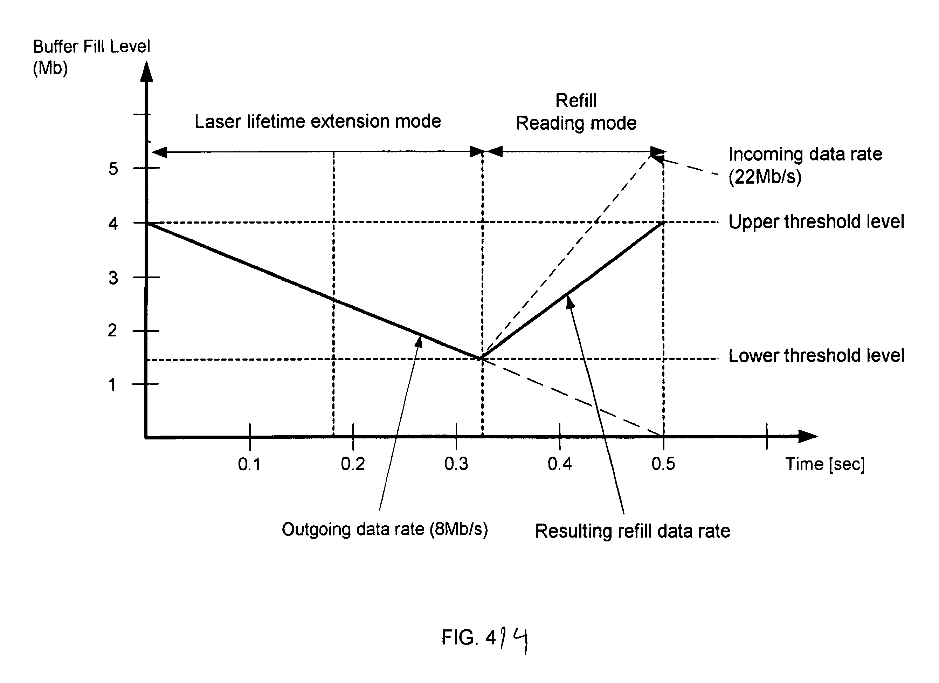

Fig. 4 illustrates the variation of the buffer fill level during a laser lifetime extension mode and a subsequent reading mode of the reproducing apparatus 100 according to the present embodiment.

Referring to Fig. 4, the fill level of the buffer is initially at the predetermined upper threshold level, which in the illustrated example coincides with the full capacity of the buffer (4Mb).

To avoid buffer overflow, once it is determined that the amount of data stored in the buffer reaches the specified upper threshold level, the incoming stream of data read from the optical disc 1 into the buffer is interrupted and the laser lifetime extension mode is initiated for extending the lifetime of the laser diode 2. During the laser lifetime extension mode, the CPU 130 continues to read out data from the buffer to be reproduced, therefore, the fill level of the buffer decreases linearly with time at the same rate at which data is being read out from the buffer. At the same time, the CPU 130 continues to monitor the fill level of the buffer.

When the fill level reaches a specified lower threshold value, in the illustrated example 1.5 Mb, the CPU 130 instructs the end of the laser lifetime extension mode and the shift into the normal reading mode, thereby resuming the operation of reading data from the optical disc 1. Since the focus and tracking controls are maintained engaged during the laser lifetime extension mode as described above, no waiting time is needed for performing tracking and focus operations. Therefore, once the lifetime extension mode is ended, the operation of reading data from the optical disc 1 can be restarted almost immediately. Accordingly, the incoming data stream into the buffer is restarted and the buffer is refilled at a rate corresponding substantially to the difference between the incoming data rate and the outgoing data rate.

The CPU 130 maintains the monitoring of the buffer fill level and when eventually detects that the upper threshold level is reached, interrupts again the incoming stream of data to avoid buffer overflow and instructs the transition to the laser lifetime transition mode in order to save the lifetime of the laser diode 2.

The duration of the reading and laser lifetime extension mode during reproduction of a given content are therefore not fixed but set dynamically based only on the buffer fill level. Therefore, in case the contents to be reproduced do not require the full capacity of the buffer and/or the incoming and outgoing data rates are similar, the whole content might be reproduced without the need of transiting to the laser lifetime extension mode. The number of laser light pulses during the duration of the laser lifetime extension mode is determined by the CPU 130 using the parameters for the desired duty cycle and stored in the storage means 140.

Alternatively, the duration of the laser lifetime extension mode and/or reading mode may be controlled using fixed parameters that are set in advance based on the characteristics of the reproducing apparatus 100, such as buffer capacity, maximum rates of incoming data and outgoing data, and stored in the storage means 140. The CPU 130 then refers to the stored parameters for controlling the duration of the laser lifetime extension mode and/or reading mode and the transition between these operation modes.

As it will be apparent to those skilled in the art, each of the above-embodiments and combinations thereof may be a reproducing/recording apparatus rather than the reproducing-only apparatus, the apparatus comprising reproduction means for reproducing the audio and/or video signals obtained from the data read by the optical head. It is also apparent that the present invention is applicable to an optical drive that obtains audio and/or video signals from the data recorded in the optical disc and supplies the obtained audio and/or video signals to external reproduction means to be reproduced.

### REFERENCE NUMERAL LIST

| **Reference Numeral** | **Description** |
|---|---|
| 1 | optical disc |
| 100 | reproducing apparatus |
| 110 | optical head |
| 120 | optical disc |
| 2 | laser diode |
| 3 | optical related components |
| 130 | CPU |
| 135 | data/address bus |
| 140 | RAM |
| 145 | flash memory |
| 150 | interface IF |
| 160 | laser diode driver |
| 170 | sampling controller |
| 180 | APC circuit |
| 190 | front diode monitor |
| 200 | APC S/H circuit |
| 210 | photo-detector integrated circuit (PDIC) |
| 220 | read channel unit |
| 230 | digital signal processor (DSP) |
| 240 | focus servo system |
| 250 | servo matrix circuit |
| 260 | servo analog-to-digital converter (Servo ADC) |
| 270 | Servo S/H circuit |
| 280 | differential phase detector (DPD) |

## Claims

1. A reproducing apparatus for reproducing data recorded on an optical record carrier (1), the apparatus comprising:
an optical head (110) comprising a laser light source (2) for reading the data recorded on the optical record carrier (1); and
a laser driver unit (160) for modulating a light output of the laser light source (2) and adapted to drive said light output to change from a reading mode to a laser lifetime extension mode when an operation of reading said data is paused,
wherein said laser lifetime extension mode is a pulsed light output mode and the laser driver unit (160) is adapted to output a laser driving signal with a predetermined timing in response to a pulsed driver control signal;
**characterized by**
a sampling controller (170) adapted to generate and output said pulsed laser driver control signal for controlling the timing of the laser driving signal and outputting at least one timing signal for controlling and coordinating in time the actions of one or more circuit blocks of the reproducing apparatus (100) with the pulsed laser driver control signal during said laser lifetime extension mode,
wherein said one or more circuit blocks includes at least one of a focus servo sample-and-hold circuit (270) and a tracking servo system (280).

2. A reproducing apparatus according to claim 1, wherein
said laser driver unit (160) is adapted to drive the light output of the laser light source (2) to change from the laser lifetime extension mode to the reading mode when the operation of reading said data is resumed.

3. A reproducing apparatus according to claims 1 to 2, wherein
said laser driver unit (160) is adapted to output a laser driving signal with the predetermined timing during said laser lifetime extension mode for causing the laser light source (2) to switch between a high light output level and a low light output level with substantially the predetermined timing.

4. A reproducing apparatus according to claim 3, wherein the sampling controller (170) is adapted to generate a continuous laser driver control signal output during the reading mode and to change the continuous laser driver control signal output to the pulsed laser driver control signal output when said operation of reading data is paused.

5. A reproducing apparatus according to any one of claims 1 to 4, the apparatus further comprising:
a feedback sample-and-hold circuit (190) adapted to receive a laser monitor signal indicative of a light output of the laser light source (2), to sample and hold the laser monitor signal and then to output the laser monitor signal; and
a feedback control circuit (180) adapted to generate and output a feedback signal for controlling the laser driver unit (160) to adjust a value of the laser driving signal based on an input laser monitor signal and a reference value and so as to cause the input laser monitor signal to converge to the reference value,
wherein said feedback control circuit (180) is adapted to receive the laser monitor signal from the feedback sample-and-hold circuit (190), and
the sampling controller (170) is adapted to generate and output a feedback sample-and-hold signal with a first predetermined timing during the laser lifetime extension mode so as to control the feedback sample-and-hold circuit (190) to sample the received laser monitor signal when the laser light source (2) is in the high light output level and to hold the sampled laser monitor signal during at least the duration of the subsequent low light output level.

6. A reproducing apparatus according to any one of claims 1 to 5, the apparatus further comprising:
a focus servo system (240) adapted to perform focus control of a laser beam incident on the optical record carrier (1) based on a signal indicative of a laser beam reflected from the optical record carrier (1) during said laser lifetime extension mode; and
said focus servo sample-and-hold circuit (270) adapted to receive said signal indicative of the laser beam reflected from the optical record carrier (1), to sample and hold the received signal and then to output the signal to the focus servo system (240);
wherein the sampling controller (170) is adapted to generate and output a focus sample-and-hold signal with a second predetermined timing during the laser lifetime extension mode so as to control the focus servo sample-and-hold circuit (270) to sample the received signal when the laser light source (2) is in the high light output level and to hold the signal during at least the duration of the subsequent low light output level.

7. A reproducing apparatus according to any one of claims 1 to 6, the apparatus further comprising:
said tracking servo system (280) adapted to perform tracking control of a laser beam incident on a record track of the optical record carrier (1) based on a signal indicative of a laser beam reflected from the optical record carrier (1), wherein
the tracking servo system (280) is maintained engaged during said laser lifetime extension mode, and
the sampling controller (170) is adapted to generate and output a tracking servo control signal with a third predetermined timing during said laser lifetime extension mode so as to control the tracking servo system (280) to perform said tracking control based on the signal indicative of the laser beam reflected from the optical record carrier (1) that is obtained when the laser light source (2) is in the high light output level.

8. A reproducing apparatus according to any one of claims 1 to 7, wherein during the laser lifetime extension mode the sampling controller (170) is adapted to synchronize at least one of the feedback sample-and-hold signal, focus sample-and-hold signal, and tracking servo control signal with the pulsed laser driver control signal.

9. A reproducing apparatus according to any one of claims 1 to 8, the apparatus further comprising:
a buffer adapted to store the data recorded in the optical record carrier (1) that is read by the optical head (110) and which is to be reproduced; and
a system controller (130) adapted to monitor a fill level of the buffer and to control the transition between the laser lifetime extension mode and the reading mode based on the fill level of the buffer.

## Patentansprüche

1. Wiedergabevorrichtung zum Wiedergeben von auf einem optischen Aufzeichnungsträger (1) aufgezeichneten Daten, wobei die Vorrichtung umfasst:
einen optischen Kopf (110), der eine Laser-Lichtquelle (2) zum Lesen der auf dem optischen Aufzeichnungsträger (1) aufgezeichneten Daten umfasst; und
eine Laser-Treibereinheit (160), die eine Lichtausgabe der Laserlichtquelle (2) moduliert und so eingerichtet ist, dass sie die Lichtausgabe so ansteuert, dass er von einem Lese-Modus zu einem Laser-Lebensdauerverlängerungs-Modus wechselt, wenn ein Vorgang des Lesens der Daten unterbrochen wird,
wobei der Laser-Lebensdauerverlängerungs-Modus ein gepulster Licht-Ausgabemodus ist und die Laser-Treibereinheit (160) so eingerichtet ist, dass sie ein Laser-Ansteuersignal mit einer vorgegebenen Taktung in Reaktion auf ein gepulstes Treiber-Steuersignal ausgibt;
**gekennzeichnet durch**
eine Abtast-Steuereinrichtung, die so eingerichtet ist, dass sie das gepulste Laser-Treiber-Steuersignal erzeugt und ausgibt, um die Taktung des Laser-Ansteuersignals zu steuern und wenigstens ein Taktungssignal zum Steuern und zeitlichen Koordinieren der Aktionen eines oder mehrerer Schaltungsblock/blöcke der Wiedergabevorrichtung (100) mit dem gepulsten Laser-Treiber-Steuersignal während des Laser-Lebensdauerverlängerungs-Modus auszugeben,
wobei der eine oder die mehreren Schaltungsblock/blöcke eine Fokus-Servo-Abtast-und-Halte-Schaltung (270) oder/und ein Spurfolge-Servosystem (280) enthält/enthalten.

2. Wiedergabevorrichtung nach Anspruch 1, wobei
die Laser-Treibereinheit (160) so eingerichtet ist, dass sie die Lichtausgabe der Laser-Lichtquelle (2) so ansteuert, dass sie von dem Laser-Lebensdauerverlängerungs-Modus zu dem Lesemodus wechselt, wenn der Vorgang des Lesens von Daten wieder aufgenommen wird.

3. Wiedergabevorrichtung nach den Ansprüchen 1 bis 2, wobei
die Laser-Treibereinheit (160) so eingerichtet ist, dass sie ein Laser-Ansteuersignal mit der vorgegebenen Taktung während des Laser-Lebensdauerverlängerungs-Modus ausgibt, um die Laser-Lichtquelle (2) zu veranlassen, mit im Wesentlichen der vorgegebenen Taktung zwischen einem hohen Lichtausgabepegel und einem niedrigen Lichtausgabepegel umzuschalten.

4. Wiedergabevorrichtung nach Anspruch 3, wobei die Abtast-Steuereinrichtung (170) so eingerichtet ist, dass sie während des Lesemodus einen kontinuierlichen Laser-Treiber-Steuersignalausgang ausgibt und den kontinuierlichen Laser-Treiber-Steuersignalausgang zu dem gepulsten Laser-Treiber-Steuersignalausgang ändert, wenn der Vorgang des Lesens von Daten unterbrochen wird.

5. Wiedergabevorrichtung nach einem der Ansprüche 1 bis 4, wobei die Vorrichtung des Weiteren umfasst:
eine Rückführ-Abtast-und-Halte-Schaltung (190), die so eingerichtet ist, dass sie ein Laser-Überwachungssignal empfängt, das eine Lichtausgabe der Laser-Lichtquelle (2) anzeigt, um das Laser-Überwachungssignal abzutasten und zu halten und dann das Laser-Überwachungssignal auszugeben; und
eine Rückführ-Steuerschaltung (180), die so eingerichtet ist, dass sie ein Rückführsignal erzeugt und ausgibt, mit dem die Laser-Treibereinheit (160) so gesteuert wird, dass sie einen Wert des Laser-Ansteuersignals auf Basis eines Eingangs-Laser-Überwachungssignals und eines Bezugswertes reguliert, und so bewirkt, dass sich das Eingangs-Laser-Überwachungssignal dem Bezugswert nähert,
wobei die Rückführ-Steuerschaltung (180) so eingerichtet ist, dass sie das Laser-Überwachungssignal von der Rückführ-Abtast-und-Halte-Schaltung (190) empfängt, und
die Abtast-Steuereinrichtung (170) so eingerichtet ist, dass sie ein Rückführ-Abtast-und-Halte-Signal mit einer ersten vorgegebenen Taktung während des Laser-Lebensdauerverlängerungs-Modus ausgibt, um die Rückführ-Abtast-und-Halte-Schaltung (190) so zu steuern, dass sie das empfangene Laser-Überwachungssignal abtastet, wenn sich die Laser-Lichtquelle (2) auf dem hohen Licht-Ausgabepegel befindet, und das abgetastete Laser-Überwachungssignal wenigstens während der Dauer des darauffolgenden niedrigen Licht-Ausgabepegels hält.

6. Wiedergabevorrichtung nach einem der Ansprüche 1 bis 5, wobei die Vorrichtung des Weiteren umfasst:
ein Fokus-Servosystem (240), das so eingerichtet ist, dass es während des Laser-Lebensdauerverlängerungs-Modus Fokussteuerung eines Laserstrahls, der auf den optischen Aufzeichnungsträger (1) auftrifft, auf Basis eines Signals durchführt, das einen Laserstrahl anzeigt, der von dem optischen Aufzeichnungsträger (1) reflektiert wird; und
die Fokus-Servo-Abtast-und-Halte-Schaltung (270), die so eingerichtet ist, dass sie das Signal empfängt, das den Laserstrahl anzeigt, der von dem optischen Aufzeichnungsträger (1) reflektiert wird, das empfangene Signal abtastet und hält und dann das Signal an das Fokus-Servosystem (240) ausgibt;
wobei die Abtast-Steuereinrichtung (170) so eingerichtet ist, dass sie während des Laser-Lebenszeitverlängerungs-Modus ein Fokus-Abtast-und-Halte-Signal mit einer zweiten vorgegebenen Taktung erzeugt und ausgibt, um die Fokus-Servo-Abtast-und-Halte-Schaltung (270) so zu steuern, dass sie das empfangene Signal abtastet, wenn sich die Laser-Lichtquelle (2) auf dem hohen Licht-Ausgabepegel befindet, und das Signal wenigstens während der Dauer des darauffolgenden niedrigen Licht-Ausgabepegels hält.

7. Wiedergabevorrichtung nach einem der Ansprüche 1 bis 6, wobei die Vorrichtung des Weiteren umfasst:
das Spurfolge-Servosystem (280), das so eingerichtet ist, dass es Spurfolgesteuerung eines Laserstrahls, der auf eine Aufzeichnungsspur des optischen Aufzeichnungsträgers (1) auftrifft, auf Basis eines Signals durchführt, das einen Laserstrahl anzeigt, der von dem optischen Aufzeichnungsträger (1) reflektiert wird, wobei das Spurfolge-Servosystem (280) während des Laser-Lebensdauerverlängerungs-Modus in Funktion gehalten wird, und
die Abtast-Steuereinrichtung (170) so eingerichtet ist, dass sie während des Laser-Lebensdauerverlängerungs-Modus ein Spurfolge-Servo-Steuersignal mit einer dritten
vorgegebenen Taktung erzeugt und ausgibt, um das Spurfolge-Servosystem (280) so zu steuern, dass es die Spurfolge-Steuerung auf Basis des Signals durchführt, das den Laserstrahl anzeigt, der von dem optischen Aufzeichnungsträger (1) reflektiert wird, und entsteht, wenn sich die Laserlichtquelle (2) auf dem hohen Lichtausgabepegel befindet.

8. Wiedergabevorrichtung nach einem der Ansprüche 1 bis 7, wobei die Abtast-Steuereinrichtung (170) so eingerichtet ist, dass sie während des Laser-Lebensdauerverlängerungs-Modus das Rückführ-Abtast-und-Halte-Signal und/oder das Fokus-Abtast-und-Halte-Signal oder/und das Spurfolge-Servo-Steuersignal mit dem gepulsten Laser-Treiber-Steuersignal synchronisiert.

9. Wiedergabevorrichtung nach einem der Ansprüche 1 bis 8, wobei die Vorrichtung des Weiteren umfasst:
einen Puffer, der so eingerichtet ist, dass er die auf dem optischen Aufzeichnungsträger (1) aufgezeichneten Daten speichert, die durch den optischen Kopf (110) gelesen werden und die wiedergegeben werden sollen; und
eine System-Steuereinrichtung (130), die so eingerichtet ist, dass sie einen Füllpegel des Puffers überwacht und den Übergang zwischen dem Laser-Lebensdauerverlängerungs-Modus und dem Lese-Modus auf Basis des Füllpegels des Puffers steuert.

## Revendications

1. Appareil de reproduction destiné à reproduire des données enregistrées sur un support d'enregistrement optique (1), l'appareil comprenant :
une tête optique (110) comprenant une source de lumière laser (2) afin de lire les données enregistrées sur le support d'enregistrement optique (1), et
une unité de lecteur laser (160) destinée à moduler la sortie lumineuse de la source de lumière laser (2) et conçue pour piloter ladite sortie lumineuse dans le but de passer d'un mode de lecture à un mode d'extension de durée de vie du laser lorsque l'opération de lecture desdites données est à l'arrêt,
dans lequel ledit mode d'extension de durée de vie du laser est un mode d'émission lumineuse pulsée et l'unité de lecteur laser (160) est conçue pour fournir en sortie un signal de pilotage du laser présentant un séquencement prédéterminé en réponse à un signal pulsé de commande du lecteur,
**caractérisé par**
un contrôleur d'échantillonnage (170) conçu pour générer et fournir en sortie ledit signal pulsé de commande de lecteur laser afin de commander le séquencement du signal de pilotage du laser et de fournir en sortie au moins un signal de séquencement destiné à commander et à coordonner dans le temps les actions d'un ou plusieurs blocs de circuits de l'appareil de reproduction (100) avec le signal pulsé de commande de lecteur laser pendant ledit mode d'extension de durée de vie du laser,
dans lequel lesdits un ou plusieurs blocs de circuits incluent au moins l'un d'un circuit échantillonneur bloqueur d'asservissement de mise au point (270) et d'un système d'asservissement de suivi de piste (280).

2. Appareil de reproduction selon la revendication 1, dans lequel
ladite unité de lecteur laser (160) est conçue pour piloter l'émission lumineuse de la source de lumière laser (2) dans le but de passer du mode d'extension de durée de vie du laser au mode de lecture lorsque l'opération de lecture desdites données est reprise.

3. Appareil de reproduction selon les revendications 1 et 2, dans lequel
ladite unité de lecteur laser (160) est conçue pour fournir en sortie un signal de pilotage de laser avec le séquencement prédéterminé pendant ledit mode d'extension de durée de vie du laser afin d'amener le basculement de la source de lumière laser (2) entre un niveau haut de sortie lumineuse et un niveau bas de sortie lumineuse avec sensiblement le séquencement prédéterminé.

4. Appareil de reproduction selon la revendication 3, dans lequel le contrôleur d'échantillonnage (170) est conçu pour générer une sortie continue de signal de commande de lecteur laser pendant le mode de lecture et de passer de la sortie continue de signal de commande de lecteur laser en sortie pulsée de signal de commande de lecteur laser lorsque ladite opération de lecture de données est à l'arrêt.

5. Appareil de reproduction selon l'une quelconque des revendications 1 à 4, l'appareil comprenant en outre :
un circuit échantillonneur bloqueur de rétroaction (190) conçu pour recevoir un signal de surveillance du laser indiquant une émission lumineuse de la source de lumière laser (2) dans le but d'échantillonner et de bloquer le signal de surveillance du laser puis de fournir en sortie le signal de surveillance du laser, et
un circuit de commande de rétroaction (180) conçu pour générer et fournir en sortie un signal de rétroaction destiné à commander l'unité de lecteur laser (160) afin d'ajuster une valeur du signal de pilotage du laser sur la base d'un signal de surveillance du laser reçu en entrée et d'une valeur de référence et de façon à amener la convergence du signal de surveillance en entrée du laser vers la valeur de référence,
dans lequel ledit circuit de commande de rétroaction (180) est conçu pour recevoir le signal de surveillance du laser provenant du circuit échantillonneur bloqueur de rétroaction (190), et
le contrôleur d'échantillonnage (170) est conçu pour générer et fournir en sortie un signal échantillonné et bloqué de rétroaction présentant un premier séquencement prédéterminé pendant le mode d'extension de durée de vie du laser de façon à commander le circuit échantillonneur bloqueur de rétroaction (190) pour échantillonner le signal de surveillance du laser reçu lorsque la source de lumière laser (2) se trouve au niveau haut de sortie lumineuse, et pour bloquer le signal de surveillance du laser échantillonné pendant au moins la durée du niveau bas de sortie lumineuse suivant.

6. Appareil de reproduction selon l'une quelconque des revendications 1 à 5, l'appareil comprenant en outre :
un système d'asservissement de mise au point (240) conçu pour effectuer la commande de mise au point d'un faisceau laser incident sur le support d'enregistrement optique (1) sur la base d'un signal indiquant un faisceau laser réfléchi depuis le support d'enregistrement optique (1) pendant ledit mode d'extension de durée de vie du laser, et
ledit circuit échantillonneur bloqueur d'asservissement de mise au point (270) conçu pour recevoir ledit signal indiquant un faisceau laser réfléchi depuis le support d'enregistrement optique (1) dans le but d'échantillonner et de bloquer le signal reçu puis de fournir en sortie le signal au système d'asservissement de mise au point (240),
dans lequel le contrôleur d'échantillonnage (170) est conçu pour générer et fournir en sortie un signal échantillonné et bloqué de mise au point avec un deuxième séquencement prédéterminé pendant le mode d'extension de durée de vie du laser de façon à commander le circuit échantillonneur bloqueur d'asservissement de mise au point (270) pour échantillonner le signal reçu lorsque la source de lumière laser (2) se trouve au niveau haut de sortie lumineuse et pour bloquer le signal pendant au moins la durée du niveau bas de sortie lumineuse suivant.

7. Appareil de reproduction selon l'une quelconque des revendications 1 à 6, l'appareil comprenant en outre :
ledit système d'asservissement de suivi de piste (280) conçu pour effectuer la commande de suivi de piste d'un faisceau laser incident sur une piste d'enregistrement du support d'enregistrement optique (1) sur la base d'un signal indiquant un faisceau laser réfléchi depuis le support d'enregistrement optique (1), dans lequel
on maintient enclenché le système d'asservissement de suivi de piste (280) pendant ledit mode d'extension de durée de vie du laser, et
le contrôleur d'échantillonnage (170) est conçu pour générer et fournir en sortie un signal de commande d'asservissement de suivi de piste avec un troisième séquencement prédéterminé pendant ledit mode d'extension de durée de vie du laser de façon à commander le système d'asservissement de suivi de piste (280) pour effectuer ladite commande de suivi de piste sur la base du signal indicatif du faisceau laser réfléchi depuis le support d'enregistrement optique (1) qui est obtenu lorsque la source de lumière laser (2) se trouve au niveau haut de sortie lumineuse.

8. Appareil de reproduction selon l'une quelconque des revendications 1 à 7, dans lequel, pendant le mode d'extension de durée de vie du laser, le contrôleur d'échantillonnage (170) est conçu pour synchroniser au moins l'un du signal d'échantillonnage blocage de rétroaction, du signal d'échantillonnage blocage de mise au point et du signal de commande d'asservissement de suivi de piste avec le signal pulsé de commande de lecteur laser.

9. Appareil de reproduction selon l'une quelconque des revendications 1 à 8, l'appareil comprenant en outre :
une mémoire tampon conçue pour mémoriser les données enregistrées dans le support d'enregistrement optique (1) qui sont lues par la tête optique (110) et qui doivent être reproduites, et
un contrôleur système (130) conçu pour surveiller le niveau de remplissage de la mémoire tampon et pour commander la transition entre le mode d'extension de durée de vie du laser et le mode de lecture sur la base du niveau de remplissage de la mémoire tampon.
